# EUROPÄISCHE PATENTSCHRIFT

(11) **EP 1 511 779 B1**
(45) Veröffentlichungstag und Bekanntmachung des Hinweises auf die Patenterteilung: **16.04.2008**
(21) Anmeldenummer: 03755041.5
(22) Anmeldetag: 19.05.2003
(51) Int. Cl.: C08F 8/00, C08G 81/02, C08G 85/00

(54) **HYDROPHOB MODIFIZIERTE VINYLAMIN- ODER ETHYLENIMINEINHEITEN ENTHALTENDE POLYMERE, VERFAHREN ZU IHRER HERSTELLUNG UND IHRE VERWENDUNG ALS RETENTIONSMITTEL**
HYDROPHOBICALLY MODIFIED POLYMERS CONTAINING VINYLAMINE UNITS OR ETHYLENIMINE UNITS, METHOD FOR THE PRODUCTION THEREOF, AND THEIR USE AS RETENTION AGENTS
POLYMERES CONTENANT DES UNITES VINYLAMINE OU ETHYLENIMINE MODIFIEES DE FACON HYDROPHOBE, PROCEDE DE FABRICATION ET UTILISATION EN TANT QU'AGENT DE RETENTION

(30) Priorität: 24.05.2002 DE 10223279
(43) Veröffentlichungstag der Anmeldung: 09.03.2005
(73) Patentinhaber: BASF SE, 67056 Ludwigshafen (DE)
(72) Erfinder: GRIMM, Günther, B-1180 Brüssel (BE); BRAIG, Volker, 69469 Weinheim-Lützelsachsen (DE); CHAMP, Simon, 67063 Ludwigshafen (DE); MAHR, Norbert, 67117 Limburgerhof (DE)
(86) Internationale Anmeldenummer: PCT/EP2003/005233
(87) Internationale Veröffentlichungsnummer: WO 2003/099880

(56) Entgegenhaltungen:
- EP-A- 0 359 034
- WO-A-98/32798
- DE-A- 19 705 992
- DE-A- 19 850 817
- US-A- 3 968 317
- US-A- 4 483 741

## Beschreibung

Die Erfindung betrifft hydrophob modifizierte Vinylamin- oder Ethylenimineinheiten enthaltende Polymere, Verfahren zu ihrer Herstellung durch Reaktion von Vinylamin-oder Ethylenimineinheiten enthaltenden Polymeren mit einem Hydrophobierungsmittel und die Verwendung der hydrophobierten Polymeren als Retentionsmittel.

Vinylamineinheiten enthaltende Polymere sind bekannt. Sie werden beispielsweise durch Polymerisieren von acyclischen N-Vinylcarbonsäureamiden wie N-Vinylformamid, und anschließende Hydrolyse der Polymeren durch Einwirkung von Säuren oder Basen hergestellt, vgl. US-A-4 421 602, US-A-3 597 314, US-A-4 578 515 und US-A-4 255 548. Partiell hydrolysierte Polyvinylformamide, die 90 bis 10 % Vinylamineinheiten enthalten, werden gemäß der Lehre der US-A-4 421 602 als Retentions-, Flockungs und Entwässerungsmittel bei der Herstellung von Papier verwendet.

Aus der EP-B-0 216 387 ist die Verwendung von Vinylamineinheiten enthaltenden Copolymeren als Trockenverfestigungsmittel für Papier bekannt. Die Copolymeren werden durch Hydrolyse von Copolymerisaten aus N-Vinylformamid und Comonomeren wie Vinylacetat, Vinylpropionat, Alkylvinylethern, N-Vinylpyrrolidon und/oder Estern, Nitrilen oder Amiden von Acrylsäure oder Methacrylsäure hergestellt.

Aus der EP-B-0 251 182 sind Copolymere bekannt, die N-Vinylformamid-, Vinylamin- und Acrylnitrileinheiten sowie gegebenenfalls geringe Anteile an Acrylamid- und Acrylsäureeinheiten enthalten.

Auch modifizierte Polyvinylamine sind bekannt. So wird beispielsweise in Macromol. Chem. Phys., Band 195, 679 (1994) die Umsetzung von Polyvinylamin mit aliphatischen Carbonsäurechloriden beschrieben. Aus der US-B-6 184 310 sind Carbamateinhei.ten enthaltende Polymere bekannt, die durch Umsetzung von Polyethylenimin oder Vinylamineinheiten enthaltenden Polymerisaten mit Halogenameisensäureestern hergestellt werden. Die Halogenameisensäureester können langkettige Alkyl- oder Alkylphenylreste aufweisen.

Aus der US-A-5 324 787 sind hydrophob modifizierte Polyvinylamine und hydrophob modifizierte Vinylamineinheiten enthaltende Copolymerisate bekannt. Sie sind durch Reaktion der Aminogruppen der Vinylamineinheiten mit C₁- bis C₁₈-Alkylgycidylethern erhältlich und werden bei der Papierherstellung als Retentionsmittel für Feinstoffe verwendet.

Andere hydrophob modifizierte Vinylamineinheiten enthaltende Polymere sind aus der EP-B-0 897 395 bekannt. Es handelt sich hierbei um β-Hydroxyalkylvinylamin-Einheiten enthaltende Polymere, die durch Reaktion von Vinylamineinheiten aufweisenden Polymeren mit langkettigen Epoxiden erhältlich sind. Die so erhältlichen Reaktionsprodukte werden beispielsweise als Retentions-, Entwässerungs- und Flockungsmittel sowie als Fixiermittel bei der Herstellung von Papier verwendet.

Außerdem sind aus der WO-A-98/50630 Fixiermittel bekannt, die durch Umsetzung von Vinylamin- oder Ethylenimineinheiten enthaltenden Polymeren mit Reaktivleimungsmitteln für Papier wie langkettigen Alkylketendimeren, langkettigen Alkyl- bzw. Alkenylbernsteinsäureanhydriden, Chlorameisensäureestern von Fettalkoholen oder C₁₂- bis C₃₆-Alkylisocyanaten, erhältlich sind.

In der WO-A-94/12560 werden Kondensationsprodukte beschrieben, die durch partielle Amidierung von Polyalkylenpolyaminen mit Carbonsäuren oder deren Derivaten und anschließende Vernetzung der teilweise amidierten Polyalkylenamine mit mindestens bifunktionellen Vernetzern erhältlich sind, wobei man pro Gewichtsteil der partiell amidierten Polyalkylenpolyamine 0,001 bis 10 Gew.-Teile eines Vernetzers einsetzt. Die Kondensationsprodukte werden als Entwässerungs-, Flockungs- und Retentionsmittel sowie als Fixiermittel bei der Herstellung von Papier verwendet.

Aus der WO-A-01/40578 ist die Verwendung von hydrophobierten Copolymeren als Entwässerungmittel bei der Herstellung von Papier bekannt. Die Polymeren werden durch Copolymerisation von hydrophoben Monomeren mit einem oder mehreren anderen ethylenisch ungesättigten Monomeren erhalten.

Der Erfindung liegt die Aufgabe zugrunde, neue Stoffe zur Verfügung zu stellen.

Die Aufgabe wird erfindungsgemäß gelöst mit hydrophob modifizierten Vinylamin- oder Ethylenimineinheiten enthaltenden Polymeren, die erhältlich sind durch Umsetzung von
(a) Vinylamin- oder Ethylenimineinheiten enthaltenden Polymeren mit
(b) Verbindungen der Formel

   R - A - (EO, PO, BuO)ₙ - X (I),
in der die Substituenten folgende Bedeutung haben:
- R =: C₄- bis C₂₆-Alkyl, C₄- bis C₂₆-Alkenyl, C₄- bis C₂₆-Hydroxyalkyl oder C₄- bis C₂₆-Alkylcarboxy,
- A =: -O-, -NH-, -COO-,
- EO =: Ethylenoxideinheit,
- PO =: Propylenoxideinheit,
- BuO =: Butylenoxideinheit,
- n =: 1 bis 250
- X =: eine funktionelle Gruppe, die mit einer OH-Gruppe kovalent verknüpfbar ist.

Die Verbindungen der Formel I sind beispielsweise dadurch erhältlich, daß man zunächst gesättigte oder ethylenisch ungesättigte, einwertige C₄- bis C₂₆-Alkohole mit Ethylenoxid, Propylenoxid und/oder Butylenoxid alkoxyliert, wobei man pro Mol eines Alkohols 1 bis 250, vorzugsweise 10 bis 100 Mol eines Alkylenoxids, vorzugsweise Ethylenoxid allein oder nacheinander Ethylenoxid und Propylenoxid bzw. Propylenoxid und Ethylenoxid, einsetzt.

In einem zweiten Verfahrensschritt erfolgt dann die Anbindung der funktionellen Gruppe X an die Alkoxylierungsprodukte durch Umsetzung der alkoxylierten Alkohole mit bifunktionellen Verbindungen wie Epihalohydrinen, vorzugsweise Epichlorhydrin, 2-Halogensäurehalogeniden vorzugsweise 2-Chloracetylchlorid, Diisocyanaten wie 2,4-Toluylendiisocyanat, Isophorondiisocyanat und Trimethylhexandiisocyanat oder cyclischen Carbonsäureanhydriden wie Maleinsäureanhydrid, Bernsteinsäureanhydrid oder Phthalsäureanhydrid. Beispielsweise entstehen beim Einsatz von Epichlorhydrin unter sauren Reaktionsbedingungen die nachstehend aufgeführten Verbindungen als Hauptprodukt, in denen die Substituenten die in Formel I angegebene Bedeutung haben und Hal. für Halogen steht:

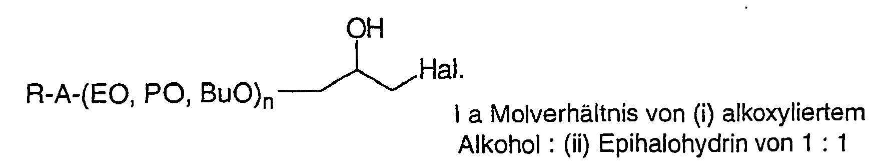

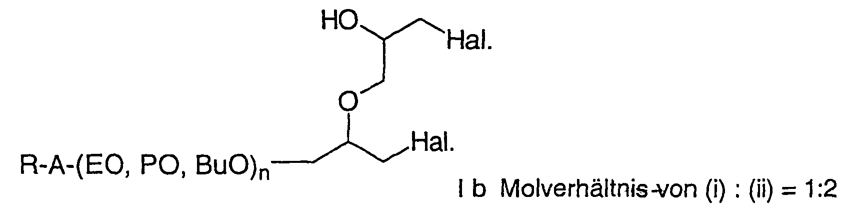

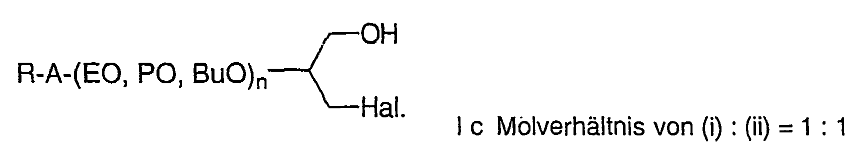

Im alkalischen Reaktionsmedium entstehen aus den (i) alkoxylierten Alkoholen und (ii) Epihalogenhydrinen beispielsweise folgende Strukturen:

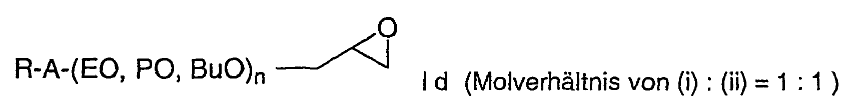

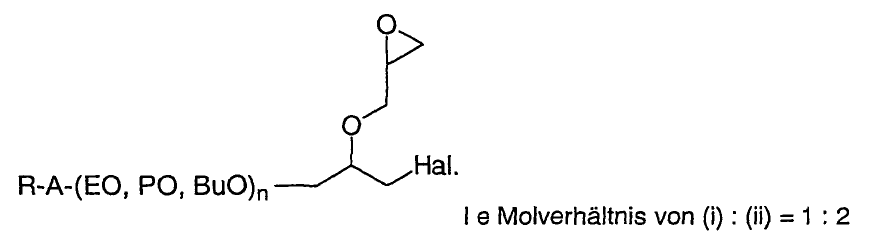

Bei der Umsetzung von (i) alkoxylierten Alkoholen mit (ii) 2-Halogencarbonsäurehalogeniden im Molverhältnis 1 : 1 entstehen Verbindungen I mit folgender Struktur:

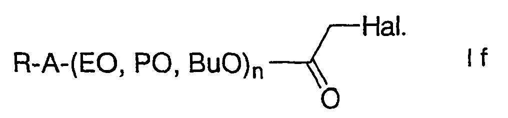

Die Umsetzung von (i) alkoxylierten Alkoholen mit (ii) mit cyclischen Carbonsäureanhydriden im Molverhältnis 1 : 1 ergibt Verbindungen der folgenden Struktur 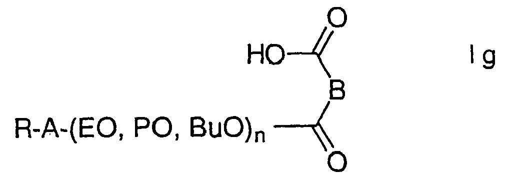 B = Alkylen, Alkenylen, Arylen
z.B.: B = -CH₂-CH₂- (ausgehend von Bernsteinsäureanhydrid), B = C₆H₄ (ausgehend von Phtalsäureanhydrid)

Die Reaktion von (i) alkoxylierten Alkoholen mit (i) Diisocyanaten, die eine unterschiedliche Reaktivität haben, ergibt folgende Verbindungen: 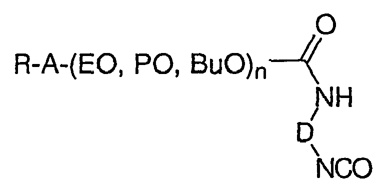 D = Alkylen, Alkenylen, Arylen,
z.B.: D = 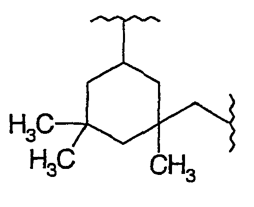 (ausgehend von Isophorondiisocyanat), 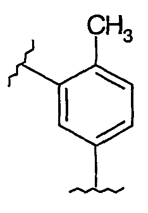 (ausgehend von Toluylendüsocyanat), 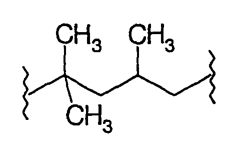 (ausgehend von Trimethylhexandiisocyanat).

Die so erhältlichen Verbindungen der Formel I werden dann mit mindestens einem Polymeren der Gruppe (a) umgesetzt, wobei dann die erfindungsgemäß hydrophobierten Polymeren erhalten werden. Die Polymeren der Gruppe (a) können mit einem Hydrophobierungsmittel der Gruppe (b) oder auch mit zwei oder mehreren solcher Hydrophobierungsmittel gleichzeitig oder nacheinander umgesetzt werden.

Die Aufgabe der Erfindung wird auch mit einem Verfahren zur Herstellung von hydrophob modifizierten Vinylamin- oder Ethylenimineinheiten enthaltenden Polymeren durch Umsetzung von Vinylamin-oder Ethylenimineinheiten enthaltenden Polymeren mit Hydrophobierungsmitteln gelöst, wenn man als Hydrophobierungsmittel mindestens eine Verbindung der Formel

R - A - (EO, PO, BuO)ₙ - X (I)

einsetzt, in der die Substituenten folgende Bedeutung haben:
- R =: C₄- bis C₂₆-Alkyl, C₄- bis C₂₆-Alkenyl, C₄- bis C₂₆-Hydroxyalkyl oder C₄- bis C₂₆-Alkylcarboxy,
- A =: -O-, -NH-, -COO-,
- EO =: Ethylenoxideinheit,
- PO =: Propylenoxideinheit,
- BuO =: Butylenoxideinheit,
- n =: 1 bis 250
- X =: eine funktionelle Gruppe, die mit einer OH-Gruppe kovalent verknüpfbar ist.

Eine hydrophobe Modifizierung der kationischen Polymeren ist beispielsweise dadurch möglich, daß man
(a) Vinylamin- oder Ethylenimineinheiten enthaltende Polymere mit
(b) den Reaktionsprodukten von (i) alkoxylierten, einwertigen C₄- bis C₂₆-Alkoholen, alkoxylierten C₄- bis C₂₆-Alkylaminen oder alkoxylierten C₄- bis C₂₆-Carbonsäuren mit (ii) Epihalohydrinen, 2-Halogencarbonsäurehalogeniden, gemischten Dihalogenalkylenen, Diisocyanaten oder cyclischen Säureanhydriden im Molverhältnis (i) : (ii) von 0,2 : 1,0 bis 1,0 : 1,0 umsetzt.

Als Komponente (b) kommen vorzugsweise die Reaktionsprodukte von (i) einwertigen C₁₄- bis C₂₂-Alkoholen mit (ii) Epichlorhydrin, Chloracetylchlorid, 2,4-Toluylendiisocyanat, Isophorondiisocyanat, Trimethylhexandiisocyanat, Bernsteinsäureanhydrid oder Maleinsäureanhydrid in Betracht. Besonders bevorzugte Hydrophobierungsmittel der Komponente (b) sind die Reaktionsprodukte von (i) Palmitylalkohol, Stearylalkohol, Oleylalkohol, Talgfettalkohol oder Mischungen der Alkohole mit (ii) Epichlorhydrin. Bei der Herstellung der Hydrophobierungsmittel der Komponente (b) beträgt das Molverhältnis (i) : (ii) vorzugsweise 1,0 : 1,0 bis 1,0 : 2,5. Der Hydrophobierungsgrad, bezogen auf Vinylamin- und/oder Ethylenimineinheiten in den Polymeren (a), beträgt beispielsweise 0,1 bis 150 Gew.-% und liegt vorzugsweise in dem Bereich von 0,5 bis 30 Gew.-%. Die Komponenten (a) und (b) werden in den meisten Fällen in einem solchen Verhältnis eingesetzt, daß der Hydrophobierungsgrad, bezogen auf Vinylamin- und/oder Ethylenimineinheiten in den Polymeren (a), 1 bis 20 Gew.-% beträgt.

Gegenstand der Erfindung ist außerdem die Verwendung der erfindungsgemäß hydrophobierten, Vinylamin- oder Ethylenimineinheiten enthaltenden Polymeren als Zusatz zum Papierstoff bei der Herstellung von Papier. Die hydrophobierten, Vinylamin- oder Ethylenimineinheiten enthaltenden Polymeren wirken dabei beispielsweise als Retentions- und Flockungsmittel. Sie können jedoch auch zusätzlich oder allein eine Fixierung von Störstoffen an den Papierfasern bewirken. Sie werden dem Papierstoff beispielsweise in Mengen von 0,003 bis 1,0 Gew.-%, vorzugsweise 0,03 bis 0,5 Gew.-%, bezogen auf trockenen Papierstoff, zugesetzt.

Vinylamineinheiten enthaltende Polymere sind bekannt, vgl. US-A-4,421,602, US-A-5,334,287, EP-A-0 216 387, US-A-5,981,689, WO-A-00/63295 und US-A-6,121,409. Sie werden durch Hydrolyse von offenkettigen N-Vinylcarbonsäureamideinheiten enthaltenden Polymeren hergestellt. Diese Polymeren sind z.B. erhältlich durch Polymerisieren von N-Vinylformamid, N-Vinyl-N-methylformamid, N-Vinylacetamid, N-Vinyl-N-methylacetamid, N-Vinyl-N-ethylacetamid oder N-Vinylpropionamid. Die genannten Monomeren können entweder allein oder zusammen mit anderen Monomeren polymerisiert werden.

Als monoethylenisch ungesättigte Monomere, die mit den N-Vinylcarbonsäureamiden copolymerisiert werden, kommen alle damit copolymerisierbaren Verbindungen in Betracht. Beispiele hierfür sind Vinylester von gesättigten Carbonsäuren von 1 bis 6 Kohlenstoffatomen wie Vinylformiat, Vinylacetat, Vinylpropionat und Vinylbutyrat und Vinylether wie C₁- bis C₆-Alkylvinylether, z.B. Methyl- oder Ethylvinylether. Weitere geeignete Comonomere sind Ester, Amide und Nitrile von ethylenisch ungesättigten C₃- bis C₆-Carbonsäuren, beispielsweise Methylacrylat, Methylmethacrylat, Ethylacrylat und Ethylmethacrylat, Acrylamid und Methacrylamid sowie Acrylnitril und Methacrylnitril.

Weitere geeignete Carbonsäureester leiten sich von Glykolen oder bzw. Polyalkylenglykolen ab, wobei jeweils nur eine OH-Gruppe verestert ist, z.B. Hydroxyethylacrylat, Hydroxyethylmethacrylat, Hydroxypropylacrylat, Hydroxybutylacrylat, Hydroxypropylmethacrylat, Hydroxybutylmethacrylat sowie Acrylsäuremonoester von Polyalkylenglykolen einer Molmasse von 500 bis 10000. Weitere geeignete Comonomere sind Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Dimethylaminobutylacrylat und Diethylaminobutylacrylat. Die basischen Acrylate-können in Form der freien Basen, der Salze mit Mineralsäuren wie Salzsäure, Schwefelsäure oder Salpetersäure, der Salze mit organischen Säuren wie Ameisensäure, Essigsäure, Propionsäure oder der Sulfonsäuren oder in quaternierter Form eingesetzt werden. Geeignete Quaternierungsmittel sind beispielsweise Dimethylsulfat, Diethylsulfat, Methylchlorid, Ethylchlorid oder Benzylchlorid.

Weitere geeignete Comonomere sind Amide ethylenisch ungesättigter Carbonsäuren wie Acrylamid, Methacrylamid sowie N-Alkylmono- und Diamide von monoethylenisch ungesättigten Carbonsäure mit Alkylresten von 1 bis 6 C-Atomen, z.B. N-Methylacrylamid, N,N-Dimethylacrylamid, N-Methylmethacrylamid, N-Ethylacrylamid, N-Propylacrylamid und tert. Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethylaminopropylacrylamid, Dimethylaminopropylmethacrylamid und Diethylaminopropylmethacrylamid.

Weiterhin sind als Comonomere geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol und N-Vinylimidazoline wie N-Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird. In Frage kommen auch Diallyldialkylammoniumhalogenide wie z.B. Diallyldimethylammoniumchlorid.

Die Copolymerisate enthalten beispielsweise
- 99 bis 1 mol-%, vorzugsweise 90 bis 10 mol-% mindestens eines N-Vinylcarbonsäureamids und
- 1 bis 99 mol-%, vorzugsweise 10 bis 90 mol-% andere, damit copolymerisierbare monoethylenisch ungesättigte Monomere
in einpolymerisierter Form. Die Comonomeren sind vorzugsweise frei von Säuregruppen.

Um Vinylamineinheiten enthaltende Polymerisate herzustellen, geht man vorzugsweise von Homopolymerisaten des N-Vinylformamids oder von Copolymerisaten aus, die durch Copolymerisieren von
- N-Vinylformamid mit
- Vinylformiat, Vinylacetat, Vinylpropionat, Acrylnitril, N-Vinylcaprolactam, N-Vinylharnstoff, N-Vinylpyrrolidon oder C₁- bis C₆-Alkylvinylethern
und anschließende Hydrolyse der Homo- oder der Copolymerisate unter Bildung von Vinylamineinheiten aus den einpolymerisierten N-Vinylformamideinheiten erhältlich sind, wobei der Hydrolysegrad z.B. 0,1 bis 100 mol-%, vorzugsweise 10 bis 50 mol-% beträgt. Die Hydrolyse der oben beschriebenen Polymerisate erfolgt nach bekannten Verfahren z.B. durch Einwirkung von Säuren, Basen oder Enzymen. Bei Verwendung von Säuren als Hydrolysemittel liegen die Vinylamineinheiten der Polymerisate als Ammoniumsalz vor, während bei der Hydrolyse mit Basen die freie Aminogruppen entstehen.

Die Homopolymerisate der N-Vinylcarbonsäureamide und ihre Copolymerisate können beispielsweise zu 0,1 bis 100, vorzugsweise 10 bis 50 mol-% hydrolysiert sein. In den meisten Fällen beträgt der Hydrolysegrad der Homo- und Copolymerisate 15 bis 40 mol-%. Der Hydrolysegrad der Homopolymerisate ist gleichbedeutend mit dem Gehalt der Polymerisate an Vinylamineinheiten. Bei Copolymerisaten, die Vinylester einpolymerisiert enthalten, kann neben der Hydrolyse der N-Vinylformamideinheiten eine Hydrolyse der Estergruppen unter Bildung von Vinylalkoholeinheiten eintreten. Dies ist insbesondere dann der Fall, wenn man die Hydrolyse der Copolymerisate in Gegenwart von Natronlauge durchführt. Einpolymerisiertes Acrylnitril wird ebenfalls bei der Hydrolyse chemisch verändert. Hierbei entstehen beispielsweise Amidgruppen oder Carboxylgruppen. Die Vinylamineinheiten enthaltenden Homo- und Copolymeren können gegebenenfalls bis zu 20 mol-% an Amidineinheiten enthalten, die z.B. durch Reaktion von Ameisensäure mit zwei benachbarten Aminogruppen oder durch intramolekulare Reaktion einer Aminogruppe mit einer benachbarten Amidgruppe z.B. von einpolymerisiertem N-Vinylformamid entsteht. Die Molmassen der Vinylamineinheiten enthaltenden Polymerisate betragen z.B. 500 bis 10 Millionen, vorzugsweise 1000 bis 5 Millionen (bestimmt durch Lichtstreuung). Dieser Molmassenbereich entspricht beispielsweise K-Werten von 5 bis 300, vorzugsweise 10 bis 250 (bestimmt nach H. Fikentscher in 5 %iger wässriger Kochsalzlösung bei 25°C und einer Polymerkonzentration von 0,5 Gew.-%).

Die Vinylamineinheiten enthaltenden Polymeren können auch in salzfreier Form eingesetzt werden. Salzfreie wässrige Lösungen von Vinylamineinheiten enthaltenden Polymerisaten können beispielsweise aus den oben beschriebenen salzhaltigen Polymerlösungen mit Hilfe einer Ultrafiltration an geeigneten Membranen bei Trenngrenzen von beispielsweise 1000 bis 500 000 Dalton, vorzugsweise 10 000 bis 300 000 Dalton hergestellt werden. Auch die unten beschriebenen wässrigen Lösungen von Amino- und/oder Ammoniumgruppen enthaltenden anderen Polymeren können mit Hilfe einer Ultrafiltration in salzfreier Form gewonnen werden.

Auch Derivate von Vinylamineinheiten enthaltenden Polymeren können erfindungsgemäß hydrophobiert werden. So ist es beispielsweise möglich, aus den Vinylamineinheiten enthaltenden Polymeren durch Amidierung, Alkylierung, Alkoxylierung mit Ethylenoxid, Propylenoxid und/oder Butylenoxid, Sulfonamidbildung, Harnstoffbildung, Thioharnstoffbildung, Carbamatbildung, Acylierung, Carboximethylierung, Phosphonomethylierung oder Michaeladdition der Aminogruppen des Polymeren eine Vielzahl von geeigneten Derivaten herzustellen. Von besonderem Interesse sind hierbei unvernetzte Polyvinylguanidine, die durch Reaktion von Vinylamineinheiten enthaltenden Polymeren, vorzugsweise Polyvinylaminen, mit Cyanamid (R¹R²N-CN, wobei R¹ ,R² = H, C₁- bis C₄-Alkyl, C₃- bis C₆-Cycloalkyl, Phenyl, Benzyl, alkylsubstituiertes Phenyl oder Naphthyl bedeuten) zugänglich sind, vgl. US-A-6,087,448, Spalte 3, Zeile 64 bis Spalte 5, Zeile 14. Die Derivatisierung der Vinylamineinheiten enthaltenden Polymeren erfolgt nur teilweise, z.B. werden nur bis zu 80 % der NH₂-Gruppen umgesetzt, so dass die verbleibenden Aminogruppen erfindungsgemäß hydrophobiert werden können.

Zu den Vinylamineinheiten enthaltenden Polymeren gehören auch hydrolysierte Pfropfpolymerisate von beispielsweise N-Vinylformamid auf Polyalkylenglkolen, Polyvinylacetat, Polyvinylalkolhol, Polyvinylformamiden, Polysacchariden wie Stärke, Oligosacchariden oder Monosacchariden. Die Pfropfpolymerisate sind dadurch erhältlich, daß man beispielsweise N-Vinylformamid in wäßrigem Medium in Gegenwart mindestens einer der genannten Pfropfgrundlagen gegebenenfalls zusammen mit copolymerisierbaren anderen Monomeren radikalisch polymerisiert und die aufgepfropften Vinylformamideinheiten anschließend in bekannten Weise zu Vinylamineinheiten hydrolysiert.

Die Vinylamineinheiten enthaltenden Polymeren können gegebenenfalls auch vernetzt sein. Vernetzte Polymere können nach zwei unterschiedlichen Verfahren erhalten werden. So ist es beispielsweise möglich, die Polymerisation von N-Vinylcarbonsäureamiden in Gegenwart eines Vernetzers durchzuführen. Als Vernetzer kommen dabei Monomere in Betracht, die mindestens zwei ethylenisch ungesättigte Doppelbindungen enthalten, z.B. Butandioldiacrylat, Butandioldimethacrylat, N,N'-Methylenbisacrylamid, Divinylharnstoff, Divinyldioxan, Diacrylate oder Dimethacrylate von Polyethylenglykolen einer Molmasse von beispielsweise 100 bis 10000, vorzugsweise 200 bis 500, Pentaerythrittriallylether, Trimethylolpropantriacrylat und Triacrylate oder Trimethacrylate von alkoxyliertem Trimethylolpropan, das mit 3 bis 90, vorzugsweise 6 bis 60 Mol Ethylenoxid und/oder Propylenoxid alkoxyliert ist.

Vinylamineinheiten enthaltende Polymere können jedoch auch dadurch vernetzt werden, daß man sie mit mindestens bifunktionellen Verbindungen wie Diepoxiden, Epihalogenhydrinen, Dihalogenälkanen und/oder Dicarbonsäuren umsetzt. Beispiele für solche Vernetzer sind Bischlorhydrinether oder Bisepoxide von Polyethylenglykolen mit Molmassen von 100 bis 500, Glutardialdehyd, Bernsteinsäure oder 1,2-Dichlorethan.

Unter Ethylenimineinheiten enthaltenden Polymeren sind Polyethylenimine sowie alle Polymeren zu verstehen, die mit Ethylenimin gepfropft sind. Polyethylenimine werden beispielsweise durch Polymerisation von Ethylenimin in wässriger Lösung in Gegenwart von säureabspaltenden Verbindungen, Säuren oder Lewis-Säuren als Katalysator hergestellt. Polyethylenimine haben beispielsweise Molmassen bis zu 2,5 Millionen, vorzugsweise von 800 bis 2.100.000. Besonders bevorzugt werden Polyethylenimine mit Molmassen von 800 bis 1.750.000 eingesetzt. Die Polyethylenimine können gegebenenfalls modifiziert werden, z.B. alkoxyliert, alkyliert oder amidiert werden. Sie können außerdem einer Michaeladdition oder einer Steckersynthese unterworfen werden. Die dabei erhältlichen Derivate von Polyethyleniminen sind ebenfalls als basische Polymere zur Herstellung von wasserabsorbierenden basischen Polymeren geeignet.

Außerdem kommen mit Ethylenimin gepfropfte Polyamidoamine in Betracht, die beispielsweise durch Kondensieren von Dicarbonsäuren mit Polyaminen und anschließendes Aufpfropfen von Ethylenimin erhältlich sind. Geeignete Polyamidoamine erhält man beispielsweise dadurch, daß man Dicarbonsäuren mit 4 bis 10 Kohlenstoffatomen mit Polyalkylenpolyaminen umsetzt, die 3 bis 10 basische Stickstoffatome im Molekül enthalten. Beispiele für Dicarbonsäuren sind Bernsteinsäure, Maleinsäure, Adipinsäure, Glutarsäure, Korksäure, Sebacinsäure oder Terephthalsäure. Bei der Herstellung der Polyamidoamine kann man auch Mischungen von Dicarbonsäuren einsetzen, ebenso Mischungen aus mehreren Polyalkylenpolyaminen. Geeignete Polyalkylenpolyamine sind beispielsweise Diethylentriamin, Triethylentetramin, Tetraethylenpentamin, Dipropylentriamin, Tripropylentetramin, Dihexamethylentriamin, Aminopropylethylendiamin und Bis-aminopropylethylendiamin. Die Dicarbonsäuren und Polyalkylenpolyamine werden zur Herstellung der Polyamidoamine auf höhere Temperaturen erhitzt, z.B. auf Temperaturen in dem Bereich von 120 bis 220, vorzugsweise 130 bis 180°C. Das bei der Kondensation entstehende Wasser wird aus dem System entfernt. Bei der Kondensation kann man gegebenenfalls auch Lactone oder Lactame von Carbonsäuren mit 4 bis 8 C-Atomen einsetzen. Pro Mol einer Dicarbonsäure verwendet man beispielsweise 0,8 bis 1,4 Mol eines Polyalkylenpolyamins. Diese Polyamidoamine werden mit Ethylenimin gepfropft. Die Pfropfreaktion wird beispielsweise in Gegenwart von Säuren oder Lewis-Säuren wie Schwefelsäure oder Bortrifluoridetheraten bei Temperaturen von beispielsweise 80 bis 100°C durchgeführt. Verbindungen dieser Art werden beispielsweise in der DE-B-24 34 816 beschrieben.

Auch die gegebenenfalls vernetzten Polyamidoamine, die gegebenenfalls noch zusätzlich vor der Vernetzung mit Ethylenimin gepfropft sind, können erfindungsgemäß hydrophob modifiziert werden. Die vernetzten, mit Ethylenimin gepfropften Polyamidoamine sind wasserlöslich und haben z.B. ein mittleres Molgewicht von 3000 bis 2 Million Dalton. Übliche Vernetzer sind z.B. Epichlorhydrin oder Bischlorhydrinether von Alkylenglykolen und Polyalkylenglykolen.

Die K-Werte der Polymerisate wurden nach H. Fikentscher, Cellulose-Chemie, Band 13, 58-64 und 71-74 (1932) in 5 %iger wäßriger Kochsalzlösung bei pH 7, einer Temperatur von 25°C und einer Polymerkonzentration von 0,5 Gew.-% bestimmt.

Die Prozentangaben in den Beispielen bedeuten Gewichtsprozent, sofern aus dem Zusammenhang nichts anderes hervorgeht.

### Beispiel 1

### a) Umsetzung eines ethoxylierten langkettigen Alkohols mit Epichlorhydrin

Zu 102 g eines Additionsprodukts von 25 Mol Ethylenoxid an 1 Mol Stearylalkohol wurden 1,92 g BF₃-Diethyletherat gegeben. Die Mischung wurde auf 110 °C erhitzt. Sobald diese Temperatur erreicht war, fügte man innerhalb von 20 Minuten 12,9 ml Epichlorhydrin zu und rührte das Reaktionsgemisch anschließend 3 h bei 110 °C und 12 h bei 25 °C. Das erhaltene Reaktionsprodukt ist das Hydrophobierungsmittel 1a).

### b) Hydrophobierung des kationischen Polymeren 1

34,3 g einer 23 %-igen wäßrigen Lösung des kationischen Polymeren 1 (Kondensationsprodukt aus Diethylentriamin und Adipinsäure im Gewichtsverhältnis 40:60 als Pfropfgrundlage, die mit Ethylenimin im Gewichtsverhältnis 1:1 gepfropft und anschließend mit einem Polyethylenoxidbischlorhydrinvernetzer (34 Ethylenoxideinheiten, ca. 55 Gew.%) vernetzt war und eine Gesamtmolmasse von 2 000 000 hatte), wurde auf 60 °C erwärmt. Nachdem die angegebene Temperatur erreicht war, gab man zu dieser Mischung 0,5 g einer Schmelze des Hydrophobierungsmittels 1a). Das Reaktionsgemisch wurde anschließend 2 h bei einer Temperatur von 60°C gerührt. Man erhielt eine viskose wäßrige Polymerlösung mit einem Feststoffgehalt von 23 %.

### Beispiel 2

### a) Umsetzung eines ethoxylierten ungesättigten Fettalkohols mit Epichlorhydrin

Zu 216 g eines Anlagerungsprodukts von 22 Mol Ethylenoxid an 1 Mol einer Mischung aus Oleyl- und Palmitylalkohol (Gewichtsverhältnis 60:40) wurden bei 75 °C 2,6 g BF₃-Diethyletherat gegeben. Die Mischung wurde auf 110 °C erhitzt. Sobald die angegebene Temperatur erreicht war, fügte man innerhalb von 20 Minuten 17,3 ml Epichlorhydrin zu und rührte das Reaktionsgemisch danach noch 10 h bei 110 °C. Das erhaltene Reaktionsprodukt wird nachstehend Hydrophobierungsmittel 2a) genannt.

### b) Hydrophobierung des kationischen Polymeren 1 mit dem Hydrophobierungsmittel 2a)

43 g des im Beispiel 1 beschriebenen kationischen Polymeren 1 wurden auf 80°C erwärmt.

Zu dieser Mischung gab man 1,4 g einer Schmelze des Hydrophobierungsmittels 2a) und rührte das Reaktionsgemisch anschließend 5 h bei 90°C. Man erhielt eine viskose wäßrige Polymerlösung mit einem Feststoffgehalt von ca. 24 %.

### Beispiel 3

### a) Umsetzung eines ethoxylierten Fettalkohols mit Epichlorhydrin

Zu 284 g eines Additionsprodukts von 80 Mol Ethylenoxid an 1 Mol Stearylalkohol wurden 0,96 g BF₃-Diethyletherat gegeben. Die Mischung wurde auf 110 °C erhitzt und bei dieser Temperatur innerhalb von 25 Minuten mit 6,5 ml Epichlorhydrin versetzt. Die Mischung wurde anschließend 5 h bei 110 °C gerührt. Das erhaltene Reaktionsprodukt wird nachstehend Hydrophobierungsmittel 3a) genannt.

### b) Umsetzung des kationischen Polymeren 2 mit Hydrophobierungsmittel 3a)

79,2 g einer 7,9 %-igen wäßrigen Lösung des kationischen Polymeren 2 (7,92 %ige wäßrige Lösung eines zu 20 Mol-% hydrolysierten Polyvinylformamids, das einen K-Wert 87 hatte, d.h. das Polymer enthielt 80 Mol-% Vinylformamideinheiten und 20 Mol-% Vinylamineinheiten), wurde auf 60°C erwärmt. Nachdem die Polymerlösung die angegebene Temperatur erreicht hatte, gab man zu dieser Mischung 0,25 g einer Schmelze des Hydrophobierungsmittels 3a) und rührte das Reaktionsgemisch anschließend noch 2 h bei 60°C. Man erhielt eine viskose wäßrige Polymerlösung.

Die kationischen Polymeren 1 und 2 sowie die hydrophobierten kationischen Polymeren 1b) - 3b) wurden bezüglich ihrer Wirksamkeit als Retentionsmittel bei der Papierherstellung geprüft. Hierfür verwendete man folgendes Stoffmodell:

| | |
|---|---|
| | 70% Birkensulfatzellstoff |
| | 30% Kiefersulfatzellstoff |
| | ca. 6,4 g/l |
| Malgrad: | ∼30°Schopper-Riegler |
| Füllstoff: | Calciumcarbonat (Hydrocarb OG, OMYA Inc.) |
| | ca. 1,6 g/l |

### Probenvorbereitung:

Sämtliche Polymerproben, die einen Feststoffanteil von 2 % enthielten, wurden mit einem Ultra-Turrax T50 (IKA Labortechnik) eine Minute homogenisiert. Zur Verwendung in der Retentionsprüfung wurden die Stoffproben auf einen Feststoffgehalt von 0,2 % verdünnt.

### Retentionsmessung:

500 ml des Papierstoffs wurden kurze Zeit bei 1000 U/min im Britt Jar Testgerät (Tappi Standard T-261) gerührt. Danach fügte man die zu prüfende Polymerlösung zu. Die jeweils zugesetzten Mengen an Polymer sind in den Tabellen 1 bis 3 angegeben. Nach einer Einwirkzeit von 30 Sekunden, wurde eine kleine Menge Filtrat abgenommen und verworfen, danach wurden 100 g Filtrat entnommen. Durch Absaugen über tarierte Filter (Schleicher & Schuell, Sorte 589, Weißband) und Trocknen wurde die Gesamtretention (FPR) bestimmt. Die getrockneten Filter wurden im Anschluss geglüht, um die Ascheretention (FPAR) zu bestimmen. Die jeweils erhaltenen Ergebnisse sind in den Tabellen 1 bis 3 angegeben.

**Tabelle 1**

| Polymer nach Beispiel | Dosierung [% fest/fest] | FPR [%] | FPAR [%] |
|---|---|---|---|
| **1b** | 0,025 | 79,6 | 22,4 |
| **1b** | 0,05 | 81,5 | 32,5 |
| **1b** | 0,1 | 82,0 | 36,3 |
| **1b** | 0,2 | 82,6 | 36,9 |
| **Kationisches Polymer 1** | 0,025 | 79,6 | 21,2 |
| **Kationisches Polymer 1** | 0,05 | 80,5 | 27,5 |
| **Kationisches Polymer 1** | 0,1 | 80,8 | 29,4 |
| **Kationisches Polymer 1** | 0,2 | 81,1 | 30,6 |

**Tabelle 2**

| Polymer nach Beispiel | Dosierung | FPR [%] | FPAR [%] |
|---|---|---|---|
| **2b** | 0,025 | 78,1 | 17,0 |
| **2b** | 0,05 | 79,5 | 22,1 |
| **2b** | 0,1 | 80,6 | 29,0 |
| **2b** | 0,2 | 81,1 | 31,3 |
| **Kationisches Polymer 1** | 0,025 | 75,8 | 8,9 |
| **Kationisches Polymer 1** | 0,05 | 78,1 | 17,0 |
| **Kationisches Polymer 1** | 0,1 | 78,9 | 22,7 |
| **Kationisches Polymer 1** | 0,2 | 79,7 | 27,3 |

**Tabelle 3**

| Polymer nach Beispiel | Dosierung | FPR [%] | FPAR [%] |
|---|---|---|---|
| **3b** | 0,025 | 79,2 | 25,3 |
| **3b** | 0,05 | 80,2 | 30,7 |
| **3b** | 0,1 | 80,9 | 35,0 |
| **3b** | 0,2 | 80,3 | 32,0 |
| **Kationisches Polymer 2** | 0,025 | 79,0 | 23,5 |
| **Kationisches Polymer 2** | 0,05 | 79,7 | 26,5 |
| **Kationisches Polymer 2** | 0,1 | 80,5 | 32,0 |
| **Kationisches Polymer 2** | 0,2 | 80,7 | 30,7 |

## Patentansprüche

1. Hydrophob modifizierte Vinylamin- oder Ethylenimineinheiten enthaltende Polymere, **dadurch gekennzeichnet, daß** sie erhältlich sind durch Umsetzung von
(a) Vinylamin- oder Ethylenimineinheiten enthaltenden Polymeren mit
(b) Verbindungen der Formel
R - A - (EO, PO, BuO)ₙ - X (I),
in der
R = C₄- bis C₂₆-Alkyl oder C₄- bis C₂₆-Alkenyl,
A = -O-, -NH-, -COO-,
EO = Ethylenoxideinheit,
PO = Propylenoxideinheit,
BuO = Butylenoxideinheit,
n = 1 bis 250
X = eine funktionelle Gruppe, die mit einer OH-Gruppe kovalent verknüpfbar ist.

2. Verfahren zur Herstellung von hydrophob modifizierten Vinylamin- oder Ethylenimineinheiten enthaltenden Polymeren durch Umsetzung von Vinylamin- oder Ethylenimineinheiten enthaltenden Polymeren mit Hydrophobierungsmitteln, **dadurch gekennzeichnet, daß** man als Hydrophobierungsmittel mindestens eine Verbindung der Formel
R - A - (EO, PO, BuO)ₙ - X (I)
einsetzt, in der die Substituenten folgende Bedeutung haben:
R = C₄- bis C₂₆-Alkyl, C₄- bis C₂₆-Alkenyl, C₄- bis C₂₆-Hydroxyalkyl oder C₄- bis C₂₆-Alkylcarboxy,
A = -O-, -NH-, -COO-,
EO = Ethylenoxideinheit,
PO = Propylenoxideinheit,
BuO = Butylenoxideinheit,
n = 1 bis 250
X = eine funktionelle Gruppe, die mit einer OH-Gruppe kovalent verknüpfbar ist.

3. Verfahren Anspruch 2, **dadurch gekennzeichnet, daß** man
(a) Vinylamin- oder Ethylenimineinheiten enthaltende Polymere mit
(b) den Reaktionsprodukten von (i) alkoxylierten, einwertigen C₄- bis C₂₆-Alkoholen, alkoxylierten C₄- bis C₂₆-Alkylaminen oder alkoxylierten C₄- bis C₂₆-Carbonsäuren mit (ii) Epihalohydrinen, 2-Halogencarbonsäurehalogeniden, gemischten Dihalogenalkylenen, Diisocyanaten oder cyclischen Säureanhydriden im Molverhältnis (i) : (ii) von 0,2 : 1,0 bis 1,0 : 1,0
umsetzt.

4. Verfahren nach Anspruch 2 oder 3, **dadurch gekennzeichnet, daß** man als Komponente (b) die Reaktionsprodukte von (i) einwertigen C₁₄- bis C₂₂-Alkoholen mit (ii) Epichlorhydrin, Chloracetylchlorid, 2,4-Toluylendiisocyanat, Isophorondiisocyanat, Trimethylhexandiisocyanat, Bernsteinsäureanhydrid oder Maleinsäureanhydrid einsetzt.

5. Verfahren nach einem der Ansprüche 2 bis 4, **dadurch gekennzeichnet, daß** man als Komponente (b) die Reaktionsprodukte von (i) Palmitylalkohol, Stearylalkohol, Oleylalkohol, Talgfettalkohol oder Mischungen der Alkohole mit (ii) Epichlorhydrin einsetzt.

6. Verfahren nach einem der Ansprüche 2 bis 5, **dadurch gekennzeichnet, daß** der Hydrophobierungsgrad, bezogen auf Vinylamin- und/oder Ethylenimineinheiten in den Polymeren (a), 0,1 bis 150 Gew.-%, vorzugsweise 0,5 bis 30 Gew.-% beträgt.

7. Verfahren nach einem der Ansprüche 1 bis 6, **dadurch gekennzeichnet, daß** der Hydrophobierungsgrad, bezogen auf Vinylamin- und/oder Ethylenimineinheiten in den Polymeren (a), 1 bis 20 Gew.-% beträgt.

8. Verwendung der hydrophobierten, Vinylamin- oder Ethylenimineinheiten enthaltenden Polymeren nach Anspruch 1 als Zusatz zum Papierstoff bei der Herstellung von Papier.

## Claims

1. A hydrophobically modified polymer comprising vinylamine or ethylenimine units, which is obtainable by reacting
(a) a polymer comprising vinylamine or ethylenimine units with
(b) a compound of the formula
R - A - (EO, PO, BuO)ₙ - X (I),
where
R is C₄- to C₂₆-alkyl or C₄- to C₂₆-alkenyl,
A is -O-, -NH- or -COO-,
EO is an ethylene oxide unit,
PO is a propylene oxide unit,
BuO is a butylene oxide unit,
n is from 1 to 250 and
X is a functional group which can be covalently bonded to an OH group.

2. A process for the preparation of a hydrophobically modified polymer comprising vinylamine or ethylenimine units by reacting a polymer comprising vinylamine or ethylenimine units with a water repellent, wherein the water repellent used is at least one compound of the formula
R - A - (EO, PO, BuO)ₙ - X (I)
where
R is C₄- to C₂₆-alkyl, C₄- to C₂₆-alkenyl, C₄- to C₂₆-hydroxyalkyl or C₄- to C₂₆-alkylcarboxyl,
A is -O-, -NH- or -COO-,
EO is an ethylene oxide unit,
PO is a propylene oxide unit,
BuO is a butylene oxide unit,
n is from 1 to 250 and
X is a functional group which can be covalently bonded to an OH group.

3. The process according to claim 2, wherein
(a) a polymer comprising vinylamine or ethylenimine units is reacted with
(b) the reaction products of (i) alkoxylated, monohydric C₄- to C₂₆-alcohols, alkoxylated C₄- to C₂₆-alkylamines or alkoxylated C₄- to C₂₆-carboxylic acids with (ii) epihalohydrins, 2-halocarboxylic acid halides, mixed dihaloalkylenes, diisocyanates or cyclic acid anhydrides in a molar ratio (i) : (ii) of from 0.2 : 1.0 to 1.0 : 1.0.

4. The process according to claim 2 or 3, wherein the reaction products of (i) monohydric C₁₄- to C₂₂-alcohols with (ii) epichlorohydrin, chloroacetyl chloride, tolylene 2,4-diisocyanate, isophorone diisocyanate, trimethylhexane diisocyanate, succinic anhydride or maleic anhydride are used as component (b).

5. The process according to any of claims 2 to 4, wherein the reaction products of (i) palmityl alcohol, stearyl alcohol, oleyl alcohol, tallow fatty alcohol or a mixture of the alcohols with (ii) epichlorohydrin are used as component (b).

6. The process according to any of claims 2 to 5, wherein the degree of water repellency, based on vinylamine and/or ethylenimine units in the polymers (a), is from 0.1 to 150, preferably from 0.5 to 30, % by weight.

7. The process according to any of claims 1 to 6, wherein the degree of water repellency, based on vinylamine and/or ethylenimine units in the polymers (a), is from 1 to 20% by weight.

8. The use of the water-repellent polymer comprising vinylamine or ethylenimine units, according to claim 1, as an additive to paper stock in papermaking.

## Revendications

1. Polymères contenant des motifs vinylamine ou éthylèneimine modifiés par voie hydrophobe, **caractérisés en ce qu'**on les obtient par réaction de :
(a) polymères contenant des motifs vinylamine ou éthylèneimine avec
(b) des composés de formulé :
R - A - (EO, PO, BuO)ₙ - X (I),
dans laquelle
R est un alkyle en C₄-C₂₆ ou un alcényle en C₄-C₂₆,
A est -O-, -NH-, -COO-,
EO est un motif oxyde d'éthylène,
PO est un motif oxyde de propylène,
BuO est un motif oxyde de butylène,
n représente 1 à 250
X est un groupe fonctionnel qui peut être lié par covalence avec un groupe OH.

2. Procédé de fabrication de polymères contenant des motifs vinylamine ou éthylèneimine modifés par voie hydrophobe par réaction de polymères contenant des motifs vinylamine ou éthylèneimine avec des agents d'hydrophobisation, **caractérisé en ce qu'**on utilise comme agent d'hydrophobisation au moins un composé de formule :
R - A - (EO, PO, BuO)ₙ - X (I)
dans laquelle les substituants ont la signification suivante:
R est un alkyle en C₄-C₂₆, alcényle en C₄-C₂₆, hydroxyalkyle en C₄-C₂₆ ou alkylcarboxy en C₄-C₂₆,
A représente -O-, -NH-, -COO-,
EO est un motif oxyde d'éthylène,
PO est un motif oxyde de propylène,
BuO est un motif oxyde de butylène,
n représente 1 à 250
X est un groupe fonctionnel qui peut être lié par covalence avec un groupe OH.

3. Procédé selon la revendication 2, **caractérisé en ce qu'**on fait réagir :
(a) des polymères contenant des motifs vinylamine ou éthylèneimine avec
(b) les produits réactionnels (i) d'alcools monovalents en C₄-C₂₆ alcoxylés, d'alkylamines en C₄-C₂₆ alcoxylées ou d'acides carboxyliques en C₄-C₂₆ alcoxylés avec (ii) des épihalohydrines, des halogénures d'acide 2-halogénocarboxylique, des dihalogénoalkylènes mixtes, des diisocyanates ou des anhydrides d'acide cycliques en rapport molaire (i):(ii) de 0,2:1,0 à 1,0:1,0.

4. Procédé selon la revendication 2 ou 3, **caractérisé en ce qu'**on met en oeuvre comme composant (b) les produits réactionnels (i) d'alcools en C₁₄-C₂₂ monovalents avec (ii) de l'épichlorhydrine, du chlorure de chloroacétyle, du 2,4-toluènediisocyanate, de l'isophoronediisocyanate, du triméthylhexanediisocyanate, de l'anhydride d'acide succinique ou de l'anhydride d'acide maléique.

5. Procédé selon l'une des revendications 2 à 4, **caractérisé en ce qu'**on utilise comme composant (b) les produits réactionnels (i) d'alcool palmitylique, d'alcool stéarylique, d'alcool oléylique, d'alcool gras de suif ou des mélanges de ces alcools avec (ii) de l'épichlorhydrine.

6. Procédé selon l'une des revendications 2 à 5, **caractérisé en ce que** le degré d'hydrophobisation, en ce qui concerne les motifs vinylamine et/ou éthylèneimine dans les polymères (a), va de 0,1 à 150% en poids, de préférence de 0,5 à 30% en poids.

7. Procédé selon l'une des revendications 1 à 6, **caractérisé en ce que** le degré d'hydrophobisation, en ce qui concerne les motifs vinylamine et/ou éthylèneimine dans les polymères (a), va de 1 à 20% en poids.

8. Utilisation des polymères contenant les motifs vinylamine ou éthylèneimine hydrophobisés selon la revendication 1 comme additif à la pâte à papier lors de la fabrication du papier.
